# FASCICULE DE BREVET EUROPEEN

(11) **EP 0 935 222 B1**
(45) Date de publication et mention de la délivrance du brevet: **25.05.2005**
(21) Numéro de dépôt: 99400243.4
(22) Date de dépôt: 03.02.1999
(51) Int. Cl.: G07C 9/00, G06K 7/10

(54) **Procédé d'identification de cartes électroniques présentes dans une zone d'investigation**
Verfahren zum Identifizieren von in einem Untersuchungsbereich präsentierten elektronischen Karten
Method for identifying electronic cards presented in an area of investigation

(30) Priorité: 04.02.1998 FR 9801309
(43) Date de publication de la demande: 11.08.1999
(73) Titulaire: STMicroelectronics S.A., 92120 Montrouge (FR)
(72) Inventeur: Gaultier, Jean-Marie, 75116 Paris (FR)
(74) Mandataire: Ballot, Paul

(56) Documents cités:
- EP-A- 0 427 342
- EP-A- 0 495 708
- EP-A- 0 696 011
- EP-A- 0 777 194
- WO-A-92/22040
- WO-A-97/34222
- US-A- 4 071 908

## Description

La présente invention se rapporte à un procédé d'identification de cartes électroniques présentes dans une zone d'investigation.

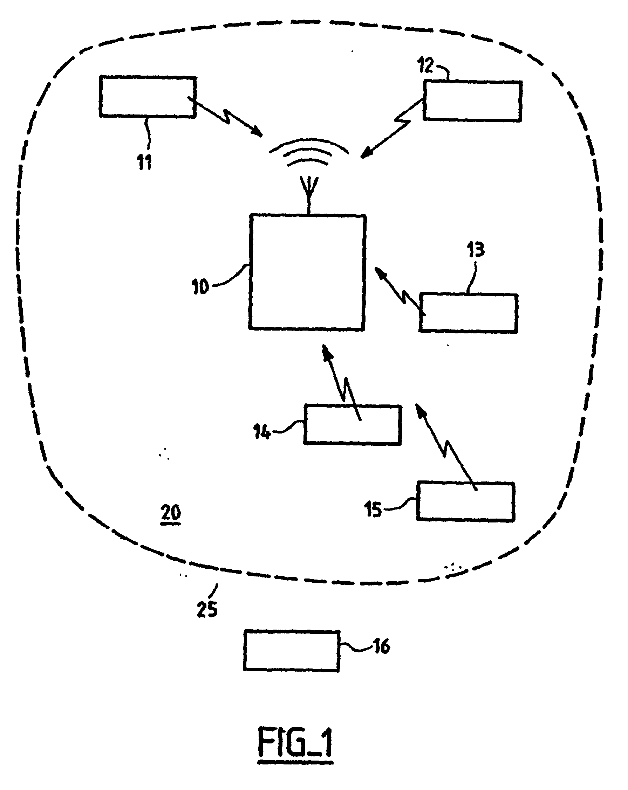

Elle s'applique à tout système comprenant une unité d'interrogation fixe telle que 10 (figure 1), pouvant dialoguer, c'est-à-dire échanger des messages, avec une pluralité de cartes électroniques, telles que 11 à 16, mobiles par rapport à l'unité d'interrogation. Le dialogue est un dialogue de type sans contact. Par exemple, les messages sont émis par onde porteuse électromagnétique radiofréquence ou hyperfréquence. Le canal de transmission est ainsi constitué par l'espace ambiant.

Au sens de la présente invention, une carte électronique peut notamment être un module électronique, un badge ou une carte à puce, et être portée par un individu, un véhicule, un appareil, du bétail, etc... L'unité d'interrogation est par exemple comprise dans une station de base, une borne de contrôle d'accès, une borne de péage à la volée, etc...

En variante, l'unité d'interrogation est mobile et les cartes électroniques sont fixes. En variante encore, l'unité d'interrogation et les cartes électroniques sont mobiles. Dans les trois cas, des cartes telles que les cartes 11 à 15 peuvent se trouver à l'intérieur d'une zone 20, centrée sur l'unité d'interrogation 10, qui est la zone de portée des messages échangés, alors que d'autres cartes telle la carte 16 peuvent se trouver à l'extérieur de cette zone. A la figure 1, la limite de cette zone 20 est symbolisée par un trait discontinu 25. On notera que la limite de la zone 20 peut varier dans le temps, du fait par exemple de la présence d'objets étrangers formant écran à la propagation des ondes électromagnétiques. On considérera cependant que, à l'échelle du temps nécessaire à la mise en oeuvre du procédé objet de la présente invention, la limite de la zone 20 est stable.

Le volume d'air compris dans la zone 20 constitue le canal de transmission des messages échangés entre l'unité d'interrogation d'une part et les cartes électronique d'autre part. Ce canal est unique et doit être partagé dans le temps selon un protocole de communication entre l'unité et les cartes. Ce protocole est de type maître/esclave. En effet, chaque échange de message entre l'unité d'interrogation (le maître) et une carte déterminée (l'esclave) est initié par l'unité d'interrogation.

A chaque carte électronique est attribué de manière univoque un numéro d'identification. Dit autrement, un numéro d'identification unique est associé à chaque carte électronique.

Un message de commande émis par l'unité d'interrogation à destination d'une carte électronique déterminée contient le numéro d'identification permettant de définir la carte électronique à qui le message de commande est destiné.

Or, du fait de la mobilité des cartes électroniques, et/ou de sa propre mobilité, l'unité d'interrogation ignore a priori si des cartes électroniques se trouvent dans la zone 20 de portée des messages. Le cas échéant, elle ignore combien de cartes sont présentes et surtout, elle ignore quelles sont les cartes présentes.

C'est pourquoi la mise en oeuvre du système requiert un procédé d'identification par l'unité d'interrogation des cartes électroniques présentes dans la zone qui l'entoure et qui correspond à la zone 20 de portée des messages échangés. Dans la suite, cette zone 20 est dénommée zone d'investigation, dans la mesure où il s'agit de la zone à l'intérieur de laquelle le procédé auquel se rapporte l'invention consiste à détecter et identifier les cartes électroniques présentes. Comme on l'aura compris, identifier une carte électronique présente revient à identifier son numéro d'identification.

Dans l'état de la technique, on a déjà proposé de tels procédés d'identification. Ces procédés connus mettent en oeuvre un algorithme itératif arborescent permettant de reconstituer bit à bit le numéro d'identification de chaque carte présente dans la zone d'investigation (voir par exemple EP-A-495 708).

Plus précisément, ces procédés consistent en un échange de messages d'interrogation émis par l'unité d'interrogation à destination d'un groupe de cartes électroniques défini par l'ensemble des cartes dont le numéro d'identification comporte un radical commun déjà identifié, chaque carte concernée qui est présente dans la zone d'investigation répondant par l'émission d'un message de réponse constitué par, ou du moins comportant, son numéro d'identification complet. L'interprétation des messages de réponse reçus par l'unité d'interrogation à chaque itération de l'algorithme permet de progresser dans l'arbre des numéros d'identification en identifiant la valeur d'un bit supplémentaire du numéro d'identification d'au moins une desdites cartes. A l'itération suivante, le groupe de cartes auxquelles le message d'interrogation émis par l'unité d'interrogation est destiné est plus restreint, du fait que le radical commun déjà identifié comporte un bit supplémentaire.

Ces procédés connus souffrent deux inconvénients.

Le premier inconvénient résulte de la longueur des messages échangés, notamment du message de réponse émis par les cartes électroniques. En effet, dans certaines applications où le nombre de cartes électroniques est important, les numéros d'identification peuvent être codés sur 16 voire 32 bits. Ceci implique un temps important requis pour effectuer l'identification de toutes les cartes présentes dans la zone d'investigation.

Le second inconvénient réside dans le fait que, à chaque itération, plusieurs cartes électroniques peuvent simultanément émettre un signal de réponse, si leurs numéros d'identification respectifs présentent un radical commun. On dit alors qu'il y a collision, car les signaux électromagnétiques qui transitent simultanément sur le canal de transmission s'additionnent et, en définitive, se corrompent mutuellement. On connaît actuellement des procédés permettant de s'affranchir de ce problème de collision, voire même exploitant ce phénomène selon un algorithme d'identification particulier. Ces procédés peuvent donner des résultats satisfaisants. Néanmoins, ils ne sont utilisables que pour certains types de codage de l'information binaire. En particulier, ils ne s'appliquent qu'à des systèmes utilisant un codage avec retour à zéro du signal dans la longueur du bit (codages dits "RZ"), comme un codage de type MANCHESTER.

La présente invention a pour but de proposer un procédé d'identification de cartes électroniques qui soit rapide et efficace, et qui s'applique à des systèmes utilisant un codage de l'information binaire quelconque.

Ce but est atteint, conformément à l'invention, grâce à un procédé d'identification de cartes électroniques selon la revendication 1.

Selon un avantage de l'invention, à chaque itération, le signal de réponse qui est émis par les cartes électroniques qui répondent ne comporte qu'un ou plusieurs bits de service en nombre réduit, c'est-à-dire bien inférieur au nombre M de bits du numéro d'identification qui est émis selon les procédés de l'art antérieur. La durée de transmission du message de réponse est donc relativement courte. Par conséquent, l'identification des cartes présentes dans la zone d'investigation est plus rapide. Par l'expression "bit de service", on désigne un bit dont la valeur logique ne porte aucune information utile en soi. On notera d'ailleurs que ce bit, ou ces bits, ont une valeur logique identique quelque soit la carte électronique qui répond.

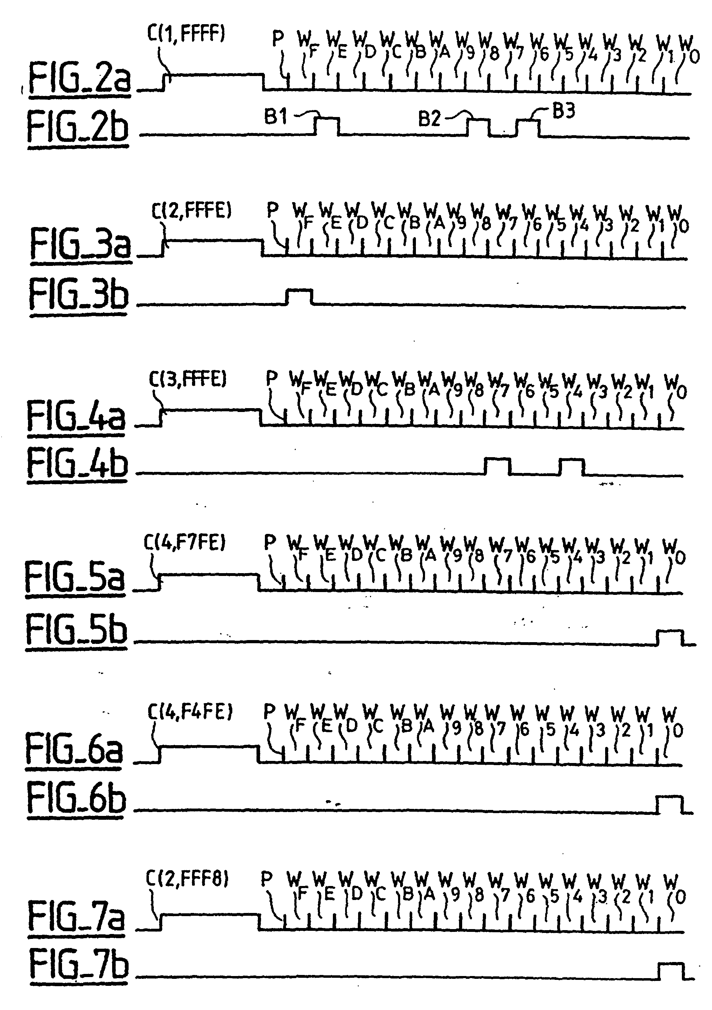

En outre, l'émission éventuelle du même message de réponse par plusieurs cartes électroniques simultanément provoque une collision qui est sans incidence sur le déroulement de l'algorithme d'identification. Cette caractéristique, ainsi que d'autres caractéristiques et avantages de l'invention, apparaîtront plus clairement à la lecture de la description détaillée qui va suivre. Celle-ci est purement illustrative et doit être lue en regard des dessins annexés, sur lesquels on a représenté:
- à la figure 1, déjà analysée: un exemple de système comportant une unité d'interrogation et une pluralité de cartes électroniques;
- aux figures 2a et 2b: des chronogrammes des signaux échangés entre l'unité d'interrogation et les cartes électroniques à la première itération;
- aux figures 3a, 3b à 13a, 13b: des chronogrammes des signaux échangés entre l'unité d'interrogation et les cartes électroniques aux itérations ultérieures.

Dans l'exemple de mise en oeuvre du procédé selon l'invention qui va suivre, on considère des cartes électroniques à chacune desquelles est attribué de manière univoque un numéro d'identification codé sur seize bits (M = 16) répartis en quatre blocs (P = 4) de quatre bits chacun (Q = 4).

Les cartes comportent une mémoire dans laquelle ce numéro d'identification est sauvegardé. Dans certaines applications, les numéros d'identification sont attribués en usine lors de la fabrication de la carte électronique. La mémoire est alors une mémoire non volatile, du type d'une mémoire EPROM, EEPROM, EPROM-Flash, etc... Dans d'autres applications, le numéro d'identification est défini aléatoirement et est attribué à chaque carte lors de sa première entrée dans la zone de portée 20 entourant l'unité d'interrogation 10 (figure 1). La mémoire peut alors être une mémoire volatile.

Dans la suite, et pour la clarté de l'exposé, la valeur d'un bloc de quatre bits est indiquée en notation hexadécimale. Ainsi la valeur d'un numéro d'identification complet est indiquée par quatre symboles parmi les symboles de cette notation (chiffres 0 à 9 et lettres A à F).

On notera que la valeur FFFF n'est attribuée à aucune carte comme numéro d'identification. On comprendra pourquoi par la suite.

Le procédé d'identification selon l'invention consiste à identifier les cartes présentes dans la zone d'investigation 20 en reconstituant leurs numéros d'identification bloc de bits par blocs de bits, selon un algorithme itératif arborescent.

Schématiquement, ou peut en effet représenter l'ensemble des valeurs des numéros d'identification selon une structure en arbre. Selon la terminologie propre à ce type de structure utilisée notamment dans le domaine informatique, on notera que cet arbre comporte quatre "générations" (puisque P=4), et que chaque "père" comporte seize "fils" (c'est à dire 2^{Q}, avec Q=4).

De préférence, les blocs de bits sont identifiés successivement dans l'ordre de leur rang au sein des numéros d'identification, ce qui présente l'avantage de la simplicité. Mais on pourrait également procéder différemment en identifiant successivement les quatre blocs de bits dans un autre ordre. Dans l'exemple, on choisit de commencer par identifier le bloc de bits de poids le plus faible, qui sera ainsi désigné ci-dessous le premier bloc, le bloc de bits de poids le plus fort étant ci-après désigné le quatrième ou dernier bloc (de même, les termes tels que suivant, précédent, premiers et derniers seront utilisés ci-dessous en référence à cette convention). Mais il faut noter qu'on pourrait tout aussi bien procéder dans l'ordre inverse en commençant par identifier le bloc de poids le plus fort, sans modifier le principe de l'invention.

L'unité d'interrogation 10 peut émettre un message d'interrogation C qui comporte un premier paramètre k indiquant le rang d'un bloc de bits encore non identifié du numéro d'identification de certaines cartes (k est un nombre entier pouvant prendre l'une quelconque des valeurs de un à P), ainsi qu'un second paramètre qui est un numéro de référence RN de même format que les numéros d'identification, c'est-à-dire codé sur M bits répartis en P blocs de Q bits (ici M = 16, P = Q = 4). La fonction de ce deuxième paramètre est d'indiquer la valeur du ou des blocs de bits déjà identifiés des numéros d'identification des cartes auxquelles le message d'interrogation est destiné. Dans la suite et aux figures, le message d'interrogation C émis par l'unité 10 s'écrira sous la forme C(k,XXXX) où XXXX désigne la notation hexadécimale du nombre de référence RN.

A chaque itération, le message d'interrogation est émis par l'unité 10 à destination de certaines cartes électroniques qui sont seules autorisées à répondre. Les cartes autorisées à répondre sont définies par groupes selon les valeurs du premier et du second paramètres prises en combinaison, ainsi qu'il va maintenant être dit.

A la première itération, k est égal à l'unité (k=1) et le numéro de référence RN a la valeur FFFF qui, ainsi qu'il a déjà été dit ci-dessus, n'est attribuée à aucune carte en tant que numéro d'identification. Le message d'interrogation C(1,FFFF) est interprété par les cartes électroniques présentes dans la zone d'investigation comme une invitation à répondre, c'est-à-dire à émettre un message de réponse. On verra quel est ce message de réponse ci-dessous. En d'autres termes, toutes les cartes électroniques sont autorisées à répondre au message d'interrogation C(1,FFFF) émis par l'unité d'interrogation à la première itération.

A chaque itération ultérieure, k est différent de l'unité. Seules sont alors autorisées à répondre les cartes qui, premièrement, sont encore non identifiées et qui, deuxièmement, ont un numéro d'identification dont au moins un bloc de bits a été identifié au cours d'une itération antérieure.

Concernant la première de ces deux conditions, on mentionnera que, selon une caractéristique de l'invention, dès que tous les blocs de bits d'un numéro d'identification ont été identifiés, l'unité d'interrogation émet un message S, dit "message de mise en sommeil", à destination de la carte correspondante, en sorte qu'elle n'est plus autorisée à répondre aux messages d'interrogation éventuellement émis par l'unité d'interrogation au cours d'une itération ultérieure pour lesquels la seconde condition ci-dessus serait éventuellement remplie. Cette carte reste en sommeil au moins le temps que dure l'identification de toutes les cartes présentes dans la zone d'investigation, c'est-à-dire jusqu'à la dernière étape du procédé selon l'invention. Bien entendu, la carte ainsi mise en sommeil peut ultérieurement être "réveillée" à réception d'un message W particulier, dit "message de réveil", qui peut être émis par l'unité d'interrogation, en sorte qu'elle redevient autorisée à répondre aux messages de commande que peut lui envoyer l'unité d'interrogation. Le message S de mise en sommeil et le message W de réveil présentés ci-dessus comportent chacun un unique paramètre qui est le numéro d'identification de la carte électronique à laquelle ils sont destinés. C'est pourquoi on les écrira respectivement S(YYYY) et W(YYYY), où YYYY est la notation hexadécimale de la valeur de ce numéro.

Concernant la seconde des deux conditions exprimées ci-dessus, on notera que dans un exemple de réalisation, à chaque itération autre que la première, les (k-1)ièmes premiers blocs de bits du numéro de référence RN constituant le second paramètre du message C émis par l'unité d'interrogation ont la valeur de blocs de bits qui ont été identifiés au cours d'une ou plusieurs itérations antérieures. Dit autrement, à chaque itération autre que la première, les blocs de bits du numéro de référence RN qui ont le même rang que les blocs de bits déjà identifiés des cartes autorisées à répondre présentent la même valeur que lesdits blocs déjà identifiés. De plus, à chaque itération autre que la première, seules sont autorisées à répondre les cartes qui ont un numéro d'identification dont les (k-1)ièmes premiers blocs de bits ont la même valeur que les (k-1)ièmes premiers blocs de bits du numéro de référence RN. Ainsi, si la valeur du paramètre k est égale à deux (k=2), seules sont autorisées à répondre les cartes dont le premier bloc du numéro d'identification a la même valeur que le premier bloc du numéro de référence RN. De même, si la valeur du paramètre k est égale à trois (k=3), seules sont autorisées à répondre les cartes dont le premier et le deuxième blocs du numéro d'identification ont la même valeur que respectivement, le premier et le deuxième blocs du numéro de référence RN. De même encore, si la valeur du paramètre k est égale à quatre (k=4), seules sont autorisées à répondre les cartes dont le premier, le deuxième et le troisième blocs du numéro d'identification ont la même valeur que, respectivement, le premier, le deuxième et le troisième blocs de bits du numéro de référence RN.

Il reste maintenant à exposer la façon dont les différentes cartes électroniques qui sont présentes dans la zone d'investigation, et qui sont autorisées à répondre, répondent aux messages d'interrogation émis par l'unité d'interrogation 10 à chaque itération de l'algorithme selon le procédé de l'invention.

A chaque itération, on a vu que l'unité d'interrogation émet le signal d'interrogation C(k,XXXX). En réponse, chaque carte présente et autorisée à répondre (on a vu ci-dessus ce que recouvre cette expression), émet un message de réponse à destination de l'unité d'interrogation. Ce message de réponse est un bit de service émis dans une fenêtre temporelle dont le positionnement dans une séquence de 2^{Q} fenêtres temporelles identiques successives indique la valeur d'un bloc de bits encore non identifié de son numéro d'identification. Plus précisément, il s'agit dans un exemple préféré de la valeur du k-ième bloc de bits, les (k-1)ièmes blocs précédents ayant déjà été identifiés au cours d'itérations antérieures (si k est différent de un, c'est-à-dire s'il s'agit d'une itération autre que la première). De préférence, le message de réponse ne comprend qu'un seul bit de service ainsi positionné. Bien entendu, pour des raisons de sécurité vis-à-vis des perturbations dans le canal, le message de réponse pourra comprendre un couple de bits de service, de préférence de valeurs logiques distinctes.

Les fenêtres temporelles sont étroites, c'est-à-dire que leur largeur est égale ou légèrement supérieure à la durée de transmission du ou des bits de service du message de réponse. De cette manière, la séquence de 2^{Q} fenêtres temporelles identiques successives est la plus courte possible, ce qui est un avantage du point de vue de la rapidité de l'identification des cartes présentes selon le procédé de l'invention. Dans le cas où le message de réponse ne comprend qu'un bit de service, on indique que la largeur des fenêtres temporelles est préférentiellement égale à une unité temporelle élémentaire, où les termes "unité temporelle élémentaire" désignent la durée de transmission d'un bit. On sait que cette durée dépend essentiellement de la fréquence de transmission des messages. Dans le cas où le message de réponse comprend un couple de bits de service, les fenêtres temporelles ont une largeur égale à deux unités temporelles élémentaires.

Avantageusement, le début (c'est à dire le point de départ) des fenêtres temporelles dans la séquence de 2^{Q} fenêtres identiques successives est marqué par les fronts de 2^{Q} impulsions émises successivement par l'unité d'interrogation après le signal d'interrogation. Ces fronts sont reçus par les cartes électroniques et peuvent être comptés (au moyen d'un compteur d'impulsions). Le résultat de ce compteur est pris en compte par les cartes électroniques pour déterminer l'instant d'émission du message de réponse en fonction de la valeur du k-ième bloc de bits de leur numéro d'identification.

Un exemple de mise en oeuvre du procédé d'identification selon l'invention va maintenant être décrit en référence aux figures 2a et 2b à 13a et 13b. Pour cet exposé, on considère cinq cartes électroniques 11, 12, 13, 14 et 15 présentes dans la zone d'investigation 20 (figure 1). Ces cartes ont un numéro d'identification dont la valeur en notation hexadécimale est, respectivement 07FE, 04FE, 3208, 1208 et 0106.

A la figure 2a, on a représenté un chronogramme montrant le signal émis sur le canal de transmission par l'unité d'interrogation 10 à la première itération. A la figure 2b, on a représenté un chronogramme, synchronisé avec celui de la figure 2a, montrant les signaux de réponse émis à la première itération par les cartes électroniques 11 à 15 présentes dans la zone 20. L'unité d'interrogation émet le signal C(1,FFFF) ainsi qu'il a été dit ci-dessus, à destination de toutes les cartes électroniques. Puis elle émet une série de seize impulsions telles que l'impulsion P, espacées dans le temps d'une durée au moins égale à une unité temporelle élémentaire, et préférentiellement égale à cette durée. Cette série de seize impulsions marque le point de départ d'autant de fenêtres temporelles notées W_{F}, W_{E}, W_{D}, ... W₁, W₀.

En réponse au message d'interrogation C(1,FFFF), chaque carte parmi les cartes présentes 11 à 15 émet un message de réponse à destination de l'unité d'interrogation 10, ce message de réponse étant un bit de service émis dans une fenêtre temporelle dont le positionnement dans la séquence de seize fenêtres temporelles identiques successives indique la valeur du premier bloc de bits de leur numéro d'identification.

Ainsi, les cartes 11 et 12 émettent un bit B1 dans la fenêtre temporelle W_{E}, les cartes 13 et 14 un bit B2 dans la fenêtre W₈ et la carte 15 un bit B3 dans la fenêtre W₆. Ces messages de réponse sont reçus et interprétés par l'unité d'interrogation, en fonction de leur position entre seize impulsions telles que l'impulsion P. Par exemple, l'unité d'interrogation comporte des moyens de réception tels qu'une antenne et des moyens d'échantillonnage du signal reçu entre les impulsions telles que l'impulsion P. On notera que deux bits sont émis simultanément dans chacune des fenêtres temporelles W_{E} et W₈. les signaux électromagnétiques se superposent alors sur le canal de transmission constitué par l'air ambiant. Ceci n'est absolument pas gênant dans la mesure où l'unité d'interrogation interprète la réception d'un bit dans une fenêtre temporelle déterminée comme signifiant que au moins une carte électronique a un numéro d'identification dont le premier bloc de bits a la valeur correspondante, et poursuit le développement de l'algorithme d'identification en conséquence. Si aucun bit de réponse n'avait été reçu par l'unité d'interrogation dans les seize fenêtres temporelles successives, cela aurait signifié qu'aucune carte ne se trouvait dans la zone d'investigation.

A l'issue de la première itération on sait donc que se trouvent dans la zone d'investigation : au moins une carte avec un numéro d'identification dont le premier bloc a la valeur E; au moins une carte avec un numéro d'identification dont le premier bloc a la valeur 8; et au moins une carte avec un numéro d'identification dont le premier bloc a la valeur 6.

Les itérations du procédé autres que la première vont maintenant être décrites en référence aux figures 3a,3b à 13a,13b qui sont comparables aux figures 2a,2b décrites ci-dessus.

A la deuxième itération (figure 3a), l'unité d'interrogation émet le message C(2,FFFE). Seules sont autorisées à répondre les cartes qui ont un numéro d'identification dont le premier bloc a la valeur F identifiée à la première itération. Un bit de réponse est émis dans la seule fenêtre temporelle W_{F} (figure 3b), ce qui signifie que au moins une carte a un numéro d'identification dont le deuxième bloc de bits a la valeur F, le premier bloc de bits de ladite (ou lesdites) carte(s) ayant par ailleurs la valeur E identifiée à la première itération.

A la troisième itération (figure 4a), l'unité d'interrogation émet alors le message C(3,FFFE). Seules sont autorisées à répondre les cartes qui ont un numéro d'identification dont le premier et le deuxième blocs ont respectivement la valeur E et la valeur F. Un bit de réponse est émis dans la fenêtre temporelle W₇ et un autre est émis dans la fenêtre temporelle W₄ (figure 4b), ce qui signifie qu'il y avait au moins deux cartes ayant répondu au message d'interrogation C(2,FFFE) émis à la deuxième itération. Au moins une de ces cartes a un numéro d'identification dont le troisième bloc de bits a la valeur 7 et au moins une autre a un numéro d'identification dont le troisième bloc de bits a la valeur 4.

A la quatrième itération, (figure 5a), l'unité d'interrogation 10 émet le signal d'interrogation C(4,F7FE). Seules sont autorisées à répondre les cartes qui ont un numéro d'identification dont les premier, deuxième et troisième blocs de bits ont respectivement la valeur E, la valeur F et la valeur 7. Un bit de réponse est émis dans la seule fenêtre temporelle W₀ (figure 5b). A ce stade, on est certain qu'une seule carte a répondu au message d'interrogation puisque, par hypothèse, chaque numéro d'identification est unique. Dit autrement, on a atteint une branche terminale de l'arbre des numéros d'identification. On a donc identifié une carte dont le numéro d'identification complet est O7FE. Il s'agit de la carte 11.

L'unité d'interrogation émet alors le signal de mise en sommeil S(07FE) en sorte que la carte 11 est mise en sommeil. Par conséquent, elle n'est plus autorisée à répondre aux messages d'interrogation C(k,XXXX) émis par l'unité d'interrogation 10.

Selon le principe d'un algorithme arborescent, on explore alors les autres branches de l'arbre des numéros d'identification à partir du dernier moment où un choix sur la valeur des blocs de bits déjà identifiés à été opéré. Dit autrement, on remonte vers la racine de l'arbre jusqu'au l'embranchement précédent, et on redescend pour explorer une autre branche pouvant mener au numéro d'identification d'une autre carte présente dans la zone d'investigation.

C'est pourquoi, à la cinquième itération (figure 6a) , l'unité d'interrogation 10 émet le signal d'interrogation C(4,F4FE). Seules sont autorisées à répondre les cartes non encore identifiées qui ont un numéro d'identification dont les premier, deuxième et troisième blocs de bits ont respectivement la valeur E, la valeur F et la valeur 4. On notera que la carte 11 ne répond pas à ce message d'interrogation bien que les trois premiers blocs de bits de son numéro d'identification présentent les valeurs indiquées ci-dessus, dans la mesure où elle n'est pas autorisée à répondre. Un bit de réponse est émis dans la seule fenêtre temporelle W₀ (figure 6b). Comme on l'a dit plus haut en ce qui concernait la cinquième itération, on est alors certain qu'une seule carte a répondu au message d'interrogation. On a donc identifié une carte dont le numéro d'identification complet est O4FE. Il s'agit de la carte 12.

L'unité d'interrogation émet alors le signal de mise en sommeil S(04FE) en sorte que la carte 12 est mise en sommeil. De même que la carte 11 déjà identifiée, la carte 12 n'est plus alors autorisée à répondre aux messages d'interrogation C(k,XXXX) émis par l'unité d'interrogation 10.

La suite des étapes du procédé selon l'invention se comprend aisément à la lumière de ce qui précède.

En effet, à la sixième itération (figure 7a), l'unité d'interrogation 10 émet le signal d'interrogation C(2,FFF8). Seules sont autorisées à répondre les cartes non encore identifiées qui ont un numéro d'identification dont le premier bloc de bits a la valeur 8. Un bit de réponse est émis dans la fenêtre temporelle W₀ (figure 7b). Il y a donc au moins une carte présente dans la zone d'investigation qui a un numéro d'identification dont le premier et le deuxième blocs de bits ont respectivement la valeur 8 et la valeur 0.

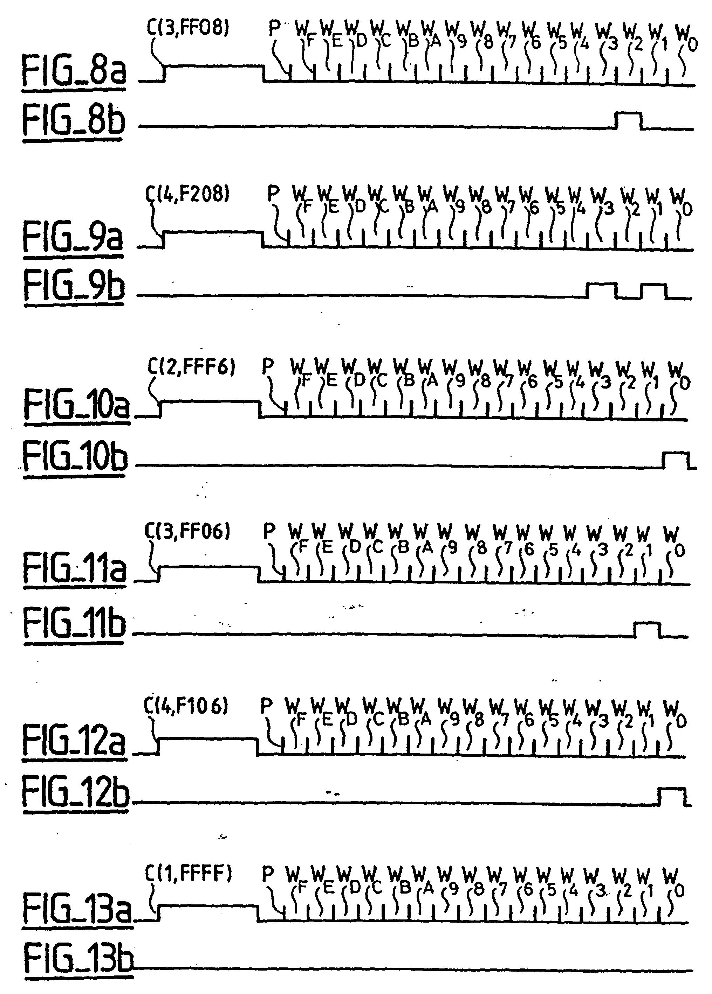

A la septième itération (figure 8a), l'unité d'interrogation 10 émet le signal d'interrogation C(3,FF08). Seules sont autorisées à répondre les cartes non encore identifiées qui ont un numéro d'identification dont le premier et le second blocs de bits ont respectivement la valeur 8 et la valeur 0. Un bit de réponse est émis dans la fenêtre temporelle W₂ (figure 8b). Il y a donc au moins une carte présente dans la zone d'investigation qui a un numéro d'identification dont le premier, le deuxième et le troisième blocs de bits ont respectivement la valeur 8, la valeur 0 et la valeur 2.

A la huitième itération (figure 9a), l'unité d'interrogation 10 émet le signal d'interrogation C(4,F208). Seules sont autorisées à répondre les cartes non encore identifiées qui ont un numéro d'identification dont le premier, le deuxième et le troisième blocs de bits ont respectivement la valeur 8, la valeur 0 et la valeur 2. Un bit de réponse est émis dans la fenêtre temporelle W₃ et un autre dans la fenêtre temporelle W₁ (figure 9b). On a donc identifié une carte dont le numéro d'identification complet est 3208 et une carte dont le numéro d'identification complet est 1208. Il s'agit respectivement de la carte 13 et de la carte 14.

L'unité d'interrogation émet alors le signal de mise en sommeil S(3208) et le signal de mise en sommeil S(1208) en sorte que les cartes 13 et 14 sont mises en sommeil. De même que la carte 11 et que la carte 12 déjà identifiées, les cartes 13 et 14 ne sont plus alors autorisée à répondre aux messages d'interrogation C(k,XXXX) émis par l'unité d'interrogation 10.

A la neuvième itération (figure 10a), l'unité d'interrogation 10 émet le signal d'interrogation C(2,FFF6). Seules sont autorisées à répondre les cartes non encore identifiées qui ont un numéro d'identification dont le premier bloc de bits a la valeur 6. Un bit de réponse est émis dans la fenêtre temporelle W₀ (figure 10b). Il y a donc au moins une carte présente dans la zone d'investigation qui a un numéro d'identification dont le premier et le deuxième blocs de bits ont respectivement la valeur 6 et la valeur 0.

A la dixième itération (figure 11a), l'unité d'interrogation 10 émet le signal d'interrogation C(3,FF06). Seules sont autorisées à répondre les cartes non encore identifiées qui ont un numéro d'identification dont le premier et le second blocs de bits ont respectivement la valeur 6 et la valeur 0. Un bit de réponse est émis dans la fenêtre temporelle W₁ (figure 11b). Il y a donc au moins une carte présente dans la zone d'investigation qui a un numéro d'identification dont le premier, le deuxième et le troisième blocs de bits ont respectivement la valeur 6, la valeur 0 et la valeur 1.

A la onzième itération (figure 12a), l'unité d'interrogation 10 émet le signal d'interrogation C(4,F106). Seules sont autorisées à répondre les cartes qui ont un numéro d'identification dont le premier, le deuxième et le troisième blocs de bits ont respectivement la valeur 6, la valeur 0 et la valeur 1. Un bit de réponse est émis dans la fenêtre temporelle W₀ (figure 12b). On a donc identifié une carte dont le numéro d'identification complet est 0106. Il s'agit de la carte 15.

L'unité d'interrogation émet alors le signal de mise en sommeil S(0106) en sorte que la carte 15 est mise en sommeil. De même que les cartes 11, 12, 13 et 14 déjà identifiées, la carte 15 n'est plus alors autorisée à répondre aux messages d'interrogation C(k,XXXX) émis par l'unité d'interrogation 10.

A ce stade, l'unité d'interrogation a épuisé les voies d'exploration de l'arbre qui étaient indiquées par les messages de réponse reçus en réponse au message d'interrogation C(1,FFFF) émis à la première itération. Il ne devrait donc plus y avoir de cartes électroniques présentes dans la zone d'investigation autres que les cinq cartes déjà identifiées ainsi qu'on l'a expliqué ci-dessus. Le procédé d'identification peut se terminer ainsi.

Toutefois, selon une caractéristique avantageuse de l'invention, le procédé d'identification comporte une ultime étape consistant à émettre (figure 13a) un signal d'interrogation C(1,FFFF) à destination de toutes les cartes, sauf bien sûr celles déjà identifiées et mises en sommeil aux cours des itérations antérieure, à savoir les cartes 11 à 15. Par l'adjectif "ultime", on signifie que cette étape intervient après l'identification et la mise en sommeil de la dernière des cartes qui se trouvaient dans la zone d'investigation lors de la première itération.

Cette caractéristique supplémentaire du procédé, qui n'est pas nécessaire mais qui est avantageuse, permet de vérifier qu'aucune nouvelle carte électronique n'est entrée dans la zone d'investigation 20 depuis la première itération, c'est à dire pendant la durée de mise en oeuvre du procédé d'identification.

A la figure 13b, on voit qu'aucun message de réponse n'est émis dans la séquence de fenêtres temporelles identiques successives W_{F} à W₀. Ceci signifie qu'aucune carte électroniques n'est présente dans la zone d'investigation, à l'exception bien sûr des cartes 11 à 15 déjà identifiées et qui ne sont pas autorisées à répondre. On est ainsi certain que la détection et l'identification des cartes présentes dans la zone d'investigation sont valablement terminées.

Ainsi que l'homme du métier l'aura compris, le procédé d'identification est facilement mis en oeuvre par un microcontrôleur compris dans l'unité d'interrogation. Ce microcontrôleur comporte des registres mémoire pour sauvegarder la valeur courante du paramètre k et du paramètre RN, les valeurs des blocs de bits déjà identifiés, et celles des numéros d'identification des cartes déjà identifiées. Il comporte aussi une mémoire dans laquelle un programme pour la mise en oeuvre du procédé est sauvegardé.

Chaque carte électronique comporte également des moyens tels qu'une antenne pour la réception du message d'interrogation, du message de mise en sommeil et du message de réveil ainsi que des impulsions telles que P, et pour l'émission du message de réponse. Chaque carte comprend également des moyens tels qu'un microcontrôleur pour l'extraction du ou des paramètres desdits messages, pour l'interprétation de la valeur de ces paramètres, et pour la formation du message de réponse en fonction de ces valeurs et de la valeur de son numéro d'identification.

On notera que, selon le procédé d'identification de l'invention, l'identification d'une carte nécessite au moins P itérations puisque un numéro d'identification est identifié bloc par bloc et que, au mieux, un bloc de bits est identifié à chaque itération. Ce résultat est à comparer aux performances des procédés de l'art antérieur qui, dans le meilleur des cas c'est à dire lorsqu'une seule carte est présente dans la zone d'investigation, permettent d'identifier ladite carte en une seule itération (le numéro d'identification étant émis en entier en réponse au message d'interrogation).

Néanmoins dans ce cas le plus favorable, le procédé de l'invention n'est quand même pas P fois plus lent que les procédés selon l'art antérieur. En effet, la durée des messages échangés (notamment le message de réponse émis par les cartes en réponse au message d'interrogation) est plus faible, du fait que ce n'est pas le numéro d'identification sur M bits qui est émis mais un (voire deux) bit(s) de service au cours d'une séquence de 2^{Q} fenêtres temporelles successives.

En outre, si plusieurs cartes se trouvent simultanément dans la zone d'investigation, le procédé d'identification selon l'invention se révèle beaucoup plus rapide, notamment car il n'y a pas de problème de collision entre les messages de réponse à prendre en compte. Ainsi, on a vu ci-dessus que l'identification complète de cinq cartes se trouvant simultanément dans la zone d'investigation n'a nécessité que onze itérations, et ce malgré des collisions fréquentes entre les messages de réponse. Aucune perte de temps n'a été induite pour le traitement des cas de collision entre les messages de réponse.

Le choix des valeurs de P et de Q pour une valeur de M donnée est optimisé en fonction du nombre de cartes électroniques qui sont susceptibles d'être présentes simultanément dans la zone d'investigation. Ce nombre dépend bien entendu de l'application envisagée.

## Revendications

1. Procédé d'identification de cartes électroniques à chacune desquelles est attribué de manière univoque un numéro d'identification codé sur M bits répartis en P blocs de Q bits, procédé consistant à reconstituer bloc de bits par bloc de bits, selon un algorithme itératif arborescent, les numéros d'identification des cartes présentes dans une zone d'investigation,
**caractérisé en ce que**, à chaque itération, il comporte les étapes suivantes:
- émission par une unité d'interrogation d'un message d'interrogation comportant un premier paramètre k, où k est un nombre entier qui peut prendre l'une des valeurs 1 à P pour indiquer le rang d'un bloc de bits des cartes encore non identifiées, et un second paramètre qui est un numéro de référence (RN) de même format que les numéros d'identification, les cartes qui sont autorisées à répondre étant définies par groupe selon les valeurs dudit premier et dudit second paramètres prises en combinaison;
- émission par chaque carte présente et autorisée à répondre d'un message de réponse à destination de l'unité d'interrogation, ledit message de réponse comprenant au moins un bit de service émis dans une fenêtre temporelle étroite dont le positionnement dans une séquence de 2^{Q} fenêtres identiques successives indique la valeur du k-ième bloc de bits de son numéro d'identification.

2. Procédé selon la revendication 1, **caractérisé en ce que**, à la première itération, le second paramètre a une valeur (FFFF) qui n'est attribuée à aucune carte comme numéro d'identification.

3. Procédé selon la revendication 1 ou selon la revendication 2, **caractérisé en ce que** toutes les cartes sont autorisées à répondre à la première itération.

4. Procédé selon l'une des revendications 1 à 3, **caractérisé en ce que**, à chaque itération autre que la première, seules sont autorisées à répondre les cartes qui, premièrement, sont encore non identifiées et qui, deuxièmement, ont un numéro d'identification dont au moins un bloc de bits a été identifié au cours d'une itération antérieure.

5. Procédé selon la revendication 4, **caractérisé en ce que**, à chaque itération autre que la première, les blocs de bits du numéro de référence (RN) qui ont le même rang que des blocs de bits déjà identifiés des cartes encore non identifiées présentent la même valeur que lesdits blocs de bits déjà identifiés.

6. Procédé selon l'une des revendications précédentes, **caractérisé en ce que** le début des fenêtres temporelles dans la séquence de 2^{Q} fenêtres identiques successives est marqué par les fronts de 2^{Q} impulsions émises successivement par l'unité d'interrogation après le message d'interrogation.

7. Procédé selon l'une des revendications précédentes, **caractérisé en ce que** la largeur de la fenêtre temporelle est sensiblement égale à la durée de transmission du message de réponse.

8. Procédé selon l'une des revendications précédentes, **caractérisé en ce que** les blocs de bits des numéros d'identification des cartes présentes dans la zone d'investigation sont identifiés successivement dans l'ordre de leur rang au sein des numéros d'identification, par exemple en commençant par le bloc de poids le plus faible.

9. Procédé selon l'une des revendications précédentes, **caractérisé en ce que**, dès que tous les blocs de bits d'un numéro d'identification ont été identifiés, l'unité d'interrogation émet un signal de mise en sommeil de la carte correspondante en sorte qu'elle n'est plus autorisée à répondre aux messages d'interrogation émis par l'unité d'interrogation.

10. Procédé selon l'une quelconque des revendications précédentes, **caractérisé en ce qu'**il comporte une ultime étape, après l'identification et la mise en sommeil de la dernière des cartes qui se trouvaient dans la zone d'investigation lors de la première itération, consistant à émettre un signal d'interrogation à destination de toutes les cartes sauf celles déjà identifiées et mises en sommeil.

## Patentansprüche

1. Verfahren zur Identifikation von elektronischen Karten, denen jeweils in eindeutiger Weise eine Identifikationsnummer zugewiesen ist, die auf M Bit, verteilt auf P Blöcke zu Q Bit, kodiert ist, welches Verfahren darin besteht, die in einer Untersuchungszone vorhandenen Identifikationsnummern nach einem baumartigen iterativen Algorithmus Bitblock-weise wiederherzustellen,
**dadurch gekennzeichnet, dass** es bei jeder Iteration die folgenden Schritte umfasst:
- Aussenden einer Abfragemeldung durch eine Abfrageeinheit, die einen ersten Parameter k, wobei k eine ganze Zahl ist, die einen der Werte 1 bis P annehmen kann, um den Rang eines Bitblocks von noch nicht identifizierten Karten anzugeben, und einen zweiten Parameter, der eine Referenznummer (RN) mit dem gleichen Format wie die Identifikationsnummer ist, umfasst, wobei die Karten, die autorisiert sind zu antworten, gruppenweise durch die Werte der in Kombination genommenen, ersten und zweiten Parameter definiert sind,
- Aussenden einer Antwortmeldung durch jede Karte, die vorhanden und autorisiert zu antworten ist, wobei die Antwortmeldung wenigstens ein Dienstbit umfasst, das in einem engen Zeitfenster abgegeben wird, dessen Position in einer Abfolge von 2^{Q} identischen, aufeinander folgenden Fenstern den Wert des k'ten Bitblocks ihrer Identifikationsnummer angibt.

2. Verfahren nach Anspruch 1, **dadurch gekennzeichnet, dass** bei der ersten Iteration der zweite Parameter einen Wert (FFFF) hat, der keiner Karte als Identifikationsnummer zugewiesen wird.

3. Verfahren nach Anspruch 1 oder nach Anspruch 2, **dadurch gekennzeichnet, dass** alle Karten autorisiert sind, bei der ersten Iteration zu antworten.

4. Verfahren nach einem der Ansprüche 1 bis 3, **dadurch gekennzeichnet, dass** bei jeder anderen als der ersten Iteration, nur jene Karten autorisiert sind zu antworten, die erstens noch nicht identifiziert sind, und die zweitens eine Identifikationsnummer haben, von der wenigstens ein Bitblock im Verlaufe einer früheren Iteration identifiziert worden ist.

5. Verfahren nach Anspruch 4, **dadurch gekennzeichnet, dass** bei jeder anderen als der ersten Iteration, die Bitblöcke der Referenznummer (RN), die den gleichen Rang wie die bereits identifizierten Bitblöcke der noch nicht identifizierten Karten haben, den gleichen Wert wie die bereits identifizierten Bitblöcke aufweisen.

6. Verfahren nach einem der vorherigen Ansprüche, **dadurch gekennzeichnet, dass** der Anfang der Zeitfenster in der Abfolge von 2^{Q} identischen, aufeinander folgenden Fenstern durch die Fronten von 2^{Q} Impulsen markiert wird, die durch die Abfrageeinheit nach der Abfragemeldung sukzessiv abgegeben werden.

7. Verfahren nach einem der vorherigen Ansprüche, **dadurch gekennzeichnet, dass** die Breite des Zeitfensters der Dauer der Übertragung der Antwortmeldung im Wesentlichen gleich ist.

8. Verfahren nach einem der vorherigen Ansprüche, **dadurch gekennzeichnet, dass** die Bitblöcke der Identifikationsnummern der in der Untersuchungszone vorhandenen Karten sukzessiv in der Reihenfolge ihres Rangs innerhalb der Identifikationsnummern identifiziert werden, beispielsweise, indem mit dem Block eines geringsten Gewichts begonnen wird.

9. Verfahren nach einem der vorherigen Ansprüche, **dadurch gekennzeichnet, dass**, sobald alle Bitblöcke einer Identifikationsnummer identifiziert worden sind, die Abfrageeinheit ein Signal abgibt, um die zugehörige Karte in Ruhezustand zu versetzen, derart, dass diese nicht mehr autorisiert ist, auf von der Abfrageeinheit ausgesendete Abfragemeldungan zu antworten.

10. Verfahren nach einem der vorherigen Ansprüche, **dadurch gekennzeichnet, dass** es einen letzten Schritt nach der Identifikation und dem in einen Ruhezustand versetzen der letzten der Karten, die sich in der Untersuchungszone bei der ersten Iteration befanden, umfasst, der darin besteht, ein Abfragesignal an alle Karten, ohne jene, die schon identifiziert und in einen Ruhezustand versetzt worden sind, auszusenden.

## Claims

1. Method of identifying electronic cards to each of which is allocated in a one-to-one manner an identification number coded on M bits distributed into P blocks of Q bits, method consisting in reconstructing block of bits by block of bits, according to a tree-like iterative algorithm, the identification numbers of the cards present in an area of investigation,
**characterized in that**, at each iteration, it comprises the following steps:
- transmission by an interrogation unit of an interrogation message comprising a first parameter k, where k is an integer which can take one of the values 1 to P to indicate the rank of a block of bits of the as yet unidentified cards, and a second parameter which is a reference number (RN) with the same format as the identification numbers, the cards which are authorized to respond being defined groupwise according to the values of the said first and the said second parameters taken in combination;
- transmission by each card present and authorized to respond of a response message destined for the interrogation unit, the said response message comprising at least one service bit transmitted in a narrow time window whose positioning in a sequence of 2^{Q} successive identical windows indicates the value of the k-th block of bits of its identification number.

2. Method according to Claim 1, **characterized in that**, at the first iteration, the second parameter has a value (FFFF) which is not allocated to any card as identification number.

3. Method according to Claim 1 or according to Claim 2, **characterized in that** all the cards are authorized to respond to the first iteration.

4. Method according to one of Claims 1 to 3, **characterized in that**, at each iteration other than the first, only the cards which, firstly, are as yet unidentified and which, secondly, have an identification number at least one block of bits of which has been identified in the course of an earlier iteration are authorized to respond.

5. Method according to Claim 4, **characterized in that**, at each iteration other than the first, the blocks of bits of the reference number (RN) which have the same rank as already identified blocks of bits of the as yet unidentified cards exhibit the same value as the said already identified blocks of bits.

6. Method according to one of the preceding claims, **characterized in that** the start of the time windows in the sequence of 2^{Q} successive identical windows is marked by the edges of 2^{Q} pulses transmitted successively by the interrogation unit after the interrogation message.

7. Method according to one of the preceding claims, **characterized in that** the width of the time window is substantially equal to the duration of sending of the response message.

8. Method according to one of the preceding claims, **characterized in that** the blocks of bits of the identification numbers of the cards present in the area of investigation are identified successively in the order of their rank within the identification numbers, for example beginning with the block of lowest weight.

9. Method according to one of the preceding claims, **characterized in that**, as soon as all the blocks of bits of an identification number have been identified, the interrogation unit transmits a signal for placing the corresponding card in sleep mode so that it is no longer authorized to respond to the interrogation messages transmitted by the interrogation unit.

10. Method according to any one of the preceding claims, **characterized in that** it comprises a final step, after the identification and the placing in sleep mode of the last of the cards which were in the area of investigation during the first iteration, consisting in transmitting an interrogation signal destined for all the cards except those already identified and placed in sleep mode.
